# EUROPÄISCHE PATENTSCHRIFT

(11) **EP 0 551 580 B1**
(45) Veröffentlichungstag und Bekanntmachung des Hinweises auf die Patenterteilung: **10.01.1996**
(21) Anmeldenummer: 92118883.5
(22) Anmeldetag: 04.11.1992
(51) Int. Cl.: A01B 33/08

(54) **Bodenbearbeitungsgerät**
Soil working machine
Machine pour travailler le sol

(30) Priorität: 17.01.1992 DE 9200515 U
(43) Veröffentlichungstag der Anmeldung: 21.07.1993
(73) Patentinhaber: Rabewerk GmbH + Co., D-49152 Bad Essen (DE)
(72) Erfinder: Warnking, Richard, Dipl.-Ing., W-4515 Bad Essen (DE)
(74) Vertreter: Missling, Arne, Dipl.-Ing.

(56) Entgegenhaltungen:
- EP-A- 0 449 362
- DE-A- 2 851 803
- DE-A- 2 947 340
- DE-A- 3 437 623

## Beschreibung

Die Erfindung bezieht sich auf ein Bodenbearbeitungsgerät mit mehreren jeweils um eine vertikale Achse drehbaren Werkzeugkreiseln, welche eine in einem Lagergehäuse gelagerte Kreiselwelle umfassen, deren oberer Bereich ein mit einem benachbarten Zahnrad kämmendes Antriebs-Zahnrad trägt, und mit einem sich quer zur Arbeitsrichtung des Bodenbearbeitungsgeräts erstreckenden Getriebegehäuse, an dem das Lagergehäuse gelagert und in dem die Zahnräder angeordnet sind, wobei an dem Lagergehäuse ein im wesentlichen plattenförmiger Flansch ausgebildet ist, welcher mit dem Getriebegehäuse verbunden ist.

Ein Bodenbearbeitungsgerät der genannten Art ist beispielsweise in Form einer Kreiselegge ausgebildet.

Bei Kreiseleggen besteht stets das Problem, eine ausreichend stabile Ausgestaltung des Getriebegehäuses zu schaffen, an welchem die einzelnen Werkzeugkreisel befestigt sind. Da die Werkzeugkreisel über miteinander kämmende Zahnräder angetrieben werden, ist es erforderlich, Verformungen des Getriebegehäuses zu vermeiden, um eine Beschädigung der Antriebs-Zahnräder zu vermeiden. Andererseits wirken auf die Werkzeuge der Werkzeugkreisel erhebliche Belastungen ein, insbesondere stoßweise Belastungen, welche durch ein Auftreffen auf Bodenhindernisse aufgebracht werden. Bei derartigen Belastungen besteht die Gefahr einer Verformung oder eines Ausbeulens des Getriebegehäuses, welches üblicherweise als kastenförmiges Blech-Biegeteil ausgestaltet ist. Zu dem wird das Getriebegehäuse durch Biegung und/oder Torsion beansprucht, wobei die Biegung insbesondere durch die Abstützung des Bodenbearbeitungsgeräts auf einer nachlaufenden Walze hervorgerufen wird. Hierbei können insbesondere außenliegende Tragarme der Walze zu einer entsprechenden Krafteinleitung und zu einer Verformung des Getriebegehäuses beitragen. Torsionsbeanspruchungen werden zu einem durch die auftretenden Arbeitskräfte der Werkzeuge und zum anderen durch die Abstützung am Endbereich des Gehäuses hervorgerufen.

Eine weitere Anforderung konstruktiver Art besteht darin, daß die einzelnen Werkzeugkreisel, Zahnräder und Lager möglichst einfach und ohne großen Montageaufwand demontierbar sein sollen, um diese bei Beschädigungen, beispielsweise der Lagerungen, ausbauen zu können. Insbesondere sollte vermieden sein, daß hierfür eine Demontage von Anschlußbock und Zentralgetriebe erforderlich ist.

Aus dem Stand der Technik sind unterschiedlichste Lösungsmöglichkeiten bekannt geworden, um die Werkzeugkreisel mit ausreichender Festigkeit an dem Getriebegehäuse zu lagern. Den nächstkommenden Stand der Technik bildet hierbei die DE-OS 29 47 340. Bei der hier gezeigten Kreiselegge ist an dem jeweiligen Lagergehäuse ein Flansch ausgebildet, welcher mit der Wandung des Getriebegehäuses verschraubt ist.

Zur zusätzlichen Versteifung wird ein zweiter Flansch auf die andere Seite der Wandung des Getriebegehäuses aufgesetzt. Der an dem Lagergehäuse befestigte Flansch ist im Innenraum des kastenförmigen Getriebegehäuses untergebracht. Diese Ausgestaltungsform erweist sich hinsichtlich der Montage als sehr aufwendig und bringt überdies das Problem mit sich, daß an den Übergangsbereichen zwischen benachbarten Flanschen Schwachstellen entstehen, welche eine Verformung des Getriebegehäuses begünstigen. Bei ausreichenden Belastungen ergeben sich bleibende Verformungen des Getriebegehäuses, welche eine Federung des Getriebegehäuses in diesen Bereichen verstärken. Durch die Verwindung des Getriebegehäuses werden die Lagerungen der Werkzeugkreisel sowie die Verzahnungen der Zahnräder geschädigt, so daß die Lebensdauer des gesamten Gerätes erheblich reduziert wird.

Die DE-OS 27 48 116 zeigt eine Bodenbearbeitungsmaschine, bei welcher in ähnlicher Weise mittels zweier gegeneinander liegender Flansche ein Teilbereich des Getriebegehäuses abgestützt wird. Auch hier ergeben sich Schwachstellen zwischen benachbarten Werkzeugkreiseln, weiterhin ist auch hierbei die Montage bzw. Demontage ausgesprochen aufwendig.

Eine weitere Ausgestaltungsvariante ist aus der DE-OS 27 02 961 bekannt. Die Steifigkeit des Getriebegehäuses soll hier durch V-förmige Sicken erhöht werden, welche sich über die gesamte Länge des Bodens des Kastenbalkens erstrecken. Die Versteifung des Flansches folgt durch räumliche Verstrebungen. Auch hierbei ergibt sich ein erheblicher Aufwand bei der Montage, da zum Austausch des Werkzeugkreisels, wie bei den vorbeschriebenen Ausgestaltungsformen, eine vollständige Demontage der Kreiselwelle erforderlich ist. Weiterhin sind die Bereiche zwischen den einzelnen Flanschen nicht versteift und damit besonders knickgefährdet. Diese Knickgefährdung wird durch die relativ großen Abstände zwischen benachbarten Flanschen verstärkt.

Bei der Bodenbearbeitungsmaschine, welche in der DE-OS 28 51 803 beschrieben ist, wird versucht, die Stabilität der gesamten Anordnung durch ein vergrößert ausgebildetes Stützteil zu erhöhen. Auch hierbei ergeben sich zwischen den benachbarten Stützteilen Schwachstellen, da dort lediglich die Blechplatte des Getriebegehäuses tragend ist. Somit führt auch diese Ausgestaltungsform zu den oben beschriebenen Nachteilen.

Eine alternative Lösungsmöglichkeit beschreibt die DE-OS 27 52 760. Dort ist in den Innenraum des Getriebegehäuses ein zusätzliches schalenartiges Versteifungselement eingelegt. Dieses erhöht zum einen das Gewicht der gesamten Anordnung und führt zum anderen zu einer sehr komplizierten Vorgehensweise bei der Montage. Ein ähnliches Lösungsprinzip wird auch in der DE-OS 26 37 722 verfolgt, dort ist eine zusätzliche Wandung in den Innenraum des Getriebegehäuses eingebracht, welche ebenfalls den Herstellungsaufwand erhöht und die Gesamtkonstruktion verteuert.

Eine weitere Lösungsvariante wurde in der DE-OS 39 02 291 vorgeschlagen. Hierbei sind Sicken zur Versteifung des Lagerbereichs des in diesem Falle angeschweißten Lagergehäuses vorgesehen. Auch diese Maßnahme führt nicht zu einer Erhöhung des Festigkeit des Getriebegehäuses.

Die IT-PS 699,034 beschreibt ein Bodenbearbeitungsgerät, bei welchem anstelle eines Getriebegehäuses eine Vielzahl einzelner, miteinander verbundener, vergrößert ausgebildeter Lagergehäuse vorgesehen ist. Diese Ausgestaltungsform erweist sich hinsichtlich des hohen Gewichts als besonders nachteilig. Weiterhin müssen die Verbindungsschrauben jeweils die gesamte Belastung aufnehmen, so daß bereits bei einer geringfügigen Lockerung der Schrauben mit einer erheblichen Beschädigung der einzelnen Werkzeugkreisel und deren Antrieben gerechnet werden muß. Zudem ist der Eingriff der einzelnen Antriebs-Zahnräder konstruktionsbedingt sehr ungenau, so daß auch hierdurch die Lebensdauer erheblich eingeschränkt wird.

Ähnliche Lösungen wie bei dem oben genannten italienischen Patent sind auch aus der EP-A1-449,362, der DE-OS 34 37 623 und der DE-OS 29 34 982 bekannt. Aus der DE-OS 34 37 623 ist eine Weiterentwicklung der Konstruktion des italienischen Patents bekannt, bei welcher die einzelnen Lagergehäuse-Elemente, ähnlich wie bei der europäischen Veröffentlichung, über Zugstangen miteinander verbunden sind. Zur Demontage eines einzelnen Werkzeugkreisels muß somit die gesamte Anordnung in ihre Bestandteile zerlegt werden. Dies bedingt, daß auch die Dichtungen zwischen den einzelnen Lagergehäuse-Elementen vollständig entfernt bzw. wiedermontiert werden müssen. Die gesamte Konstruktion ist somit in der Praxis nur schlecht verwendbar und konstruktiv sehr aufwendig. Weiterhin ist keine ausreichende Festigkeit gewährleistet, da die einzelnen Zugstäbe stets ein gewisses Spiel aufweisen müssen und bei Belastungen in sich verformt werden können, so daß sich die bereits oben beschriebenen Nachteile ergeben. Gleiches gilt für die Ausgestaltung gemäß der europäischen Offenlegungsschrift, hierbei ist es nicht möglich, einzelne Werkzeugkreisel ohne vollständige Demontage der gesamten Anordnung auszubauen. Es ist hierbei zwar ein zusätzlicher Deckel vorgesehen, welcher den Innenraum der einzelnen Lagergehäuse-Elemente nach oben abdeckt, dieser Deckel vermag jedoch kaum zur Stabilität beizutragen. Die Lösung gemäß der DE-OS 29 34 982 ist noch unda die einzelnen Gehäusesegmente sowohl miteinander verschraubt werden als auch mit einem durchgehenden Rahmenprofil verbunden werden müssen. Eine Verwendung dieser Ausgestaltungsform bei nebeneinander angeordneten, miteinander kämmenden Antriebszahnräder scheidet somit aus. Auch hierbei ist es zur Demontage eines einzelnen Werkzeugkreisels erforderlich, die gesamte Anordnung auseinander zu bauen, da sämtliche Werkzeugkreisel an dem Rahmenprofil verschraubt sind und einem Ausbau eines einzelnen Werkzeugkreisels im Wege stehen.

Der Erfindung liegt die Aufgabe zugrunde, ein Bodenbearbeitungsgerät der eingangs genannten Art zu schaffen, welches bei einfachem Aufbau und kostengünstiger Herstellbarkeit, insbesondere hinsichtlich des Getriebegehäuses ein hohes Maß an Verformungsfestigkeit aufweist, bei welchem die Werkzeugkreisel, insbesondere deren Lagerung und Antrieb vor Beschädigung geschützt sind und bei welchem einzelne Werkzeugkreisel im Bedarfsfalle einfach demontierbar sind.

Erfindungsgemäß wird die Aufgabe dadurch gelöst, daß die plattenförmige Flansche benachbarter Lagergehäuse lösbar miteinander und dem Getriebegehäuse verbunden sind.

Das erfindungsgemäße Bodenbearbeitungsgerät zeichnet sich durch eine Reihe erheblicher Vorteile aus. Durch die feste Verbindung benachbarter Flansche bilden die Flansche von einem Ende des kastenförmigen Getriebegehäuses zu dessen anderen Ende ein tragendes Element, welches in sich ein hohes Maß an Festigkeit aufweist. Es ergibt sich hierbei insbesondere ein hohes Maß an Verwindungs- oder Torsionsfestigkeit. Da die Verschraubungen zwischen den Flanschen und dem Getriebegehäuse nicht die einzigen kraftübertragenden Elemente sind, ergibt sich durch die gegenseitige Verschraubung benachbarter Flansche eine zusätzliche Festigkeit. Günstig ist es hierbei, daß die Flansche konstruktiv nur geringfügig verändert werden müssen, so daß im wesentlichen bekannte Konstruktionen verwendbar sind. Es ist beispielsweise lediglich erforderlich, an den Flanschen zusätzliche Laschen oder ähnliches vorzusehen und die erforderlichen Bohrungen einzubringen. Besonders günstig ist es dabei, daß die Flansche selbst nicht mit höchster Präzision gefertigt werden müssen, da lediglich die paßgenaue Einbringung der Bohrungen hinsichtlich der Festigkeit der Gesamtkonstruktion von Bedeutung ist.

In günstiger Weiterbildung der Konstruktion ist vorgesehen, daß die Flansche benachbarter Lagergehäuse jeweils in Teilbereiche überlappend und gemeinsam mit dem Getriebegehäuse verbunden sind. Besonders günstig kann es hierbei sein, wenn der Flansch und das zugehörige Lagergehäuse zur Demontage um eine vertikale Achse um 90 Grad verschwenkbar sind. Durch diese Verschwenkung wird die Überlappung benachbarter Flansche aufgehoben, so daß auch ein im mittleren Bereich des Getriebegehäuses angeordneter Flansch problemlos demontiert werden kann. Im besonderen ist der Flansch so ausgebildet, daß er im montierten Zustand in Richtung der Längserstreckung des Getriebegehäuses größer dimensioniert ist, als in der Querrichtung.

Die benachbarten Flansche können jeweils schuppenartig überlappend ausgebildet sein, so daß der jeweilige Flansch den Randbereich des einen benachbarten Flansches überlagert, während er unter den Randbereichen des anderen benachbarten Flansches untergeschoben ist. Alternativ hierzu können die Flansche auch abwechselnd überlappend bzw. untergreifend ausgebildet sein.

Alternativ hierzu ist es erfindungsgemäß auch möglich, benachbarte Flansche mittels einer zumindest deren Randbereiche überdeckenden, zusammen mit den Flanschen befestigbaren Platte aneinander zu lagern. Die Platte kann rechteckig ausgebildet sein, es ist auch möglich, diese so zu profilieren, daß sie größere Teilbereiche benachbarter Flansche übergreift. Zur Verstärkung des Versteifungseffektes kann die Platte auch mit Abkantungen, Versteifungsrippen oder ähnlichem versehen sein. Weiterhin ist es möglich, die Platte innerhalb oder außerhalb der Wandung des Getriebegehäuses zu montieren.

Weiterhin kann es erfindungsgemäß günstig sein, benachbarte Flansche zur Ausbildung einer selbsttragenden Struktur miteinander zu verbinden. Hierbei kann auf die Verwendung einer Wandung des Getriebegehäuses verzichtet werden, vielmehr können die miteinander verbundenen Flansche eine in sich stabile Struktur bilden, so daß das Getriebegehäuse lediglich zur Versteifung und zur Abdeckung der Antriebs-Zahnräder dient.

Um bei der letztgenannten Ausgestaltungsvariante ein Eindringen von Schmutzpartikeln in den Innenraum des Getriebegehäuses zu verhindern, ist es günstig, wenn zwischen den Flanschen bzw. am Übergangsbereich zwischen dem Flansch und dem Getriebegehäuse eine Dichtung vorgesehen ist.

Im folgenden wird die Erfindung anhand von Ausführungsbeispielen in Verbindung mit der Zeichnung beschrieben. Dabei zeigt:
- Fig. 1: eine schematische Seitenansicht des erfindungsgemäßen Bodenbearbeitungsgeräts,
- Fig. 2: eine Seiten-Schnittansicht eines Teilbereichs eines Ausführungsbeispiels des Getriebegehäuses mit montierten Werkzeugkreiseln,
- Fig. 3: eine Unteransicht der Anordnung gemäß Fig. 2, wobei die Werkzeuge und die Werkzeugträger nicht gezeigt sind,
- Fig. 4: eine Ansicht eines weiteren Ausführungsbeispiels, ähnlich Fig. 3,
- Fig. 5: eine Teil-Schnittansicht des in Fig. 4 gezeigten Ausführungsbeispiels,
- Fig. 6: eine Unteransicht eines weiteren Ausführungsbeispiels, ähnlich dem in Fig. 4 gezeigten Ausführungsbeispiel,
- Fig. 7: eine Teil-Schnittansicht des in Fig. 6 gezeigten Ausführungsbeispiels, ähnlich Fig. 5,
- Fig. 8: eine Seiten-Schnittansicht eines weiteren Ausführungsbeispiels, ähnlich Fig. 2,
- Fig. 9: eine stirnseitige Schnittansicht des in Fig. 8 gezeigten Ausführungsbeispiels,
- Fig. 10: eine Seiten-Schnittansicht eines weiteren Ausführungsbeispiels, ähnlich der Darstellung der Fig. 2 und 8,
- Fig. 11: eine vergrößerte Detailansicht eines weiteren Ausführungsbeispiels des Dichtungsbereichs zwischen benachbarten Flanschen analog dem Ausführungsbeispiel gemäß Fig. 10,
- Fig. 12: eine stirnseitige Schnittansicht des in Fig. 10 gezeigten Ausführungsbeispiels.

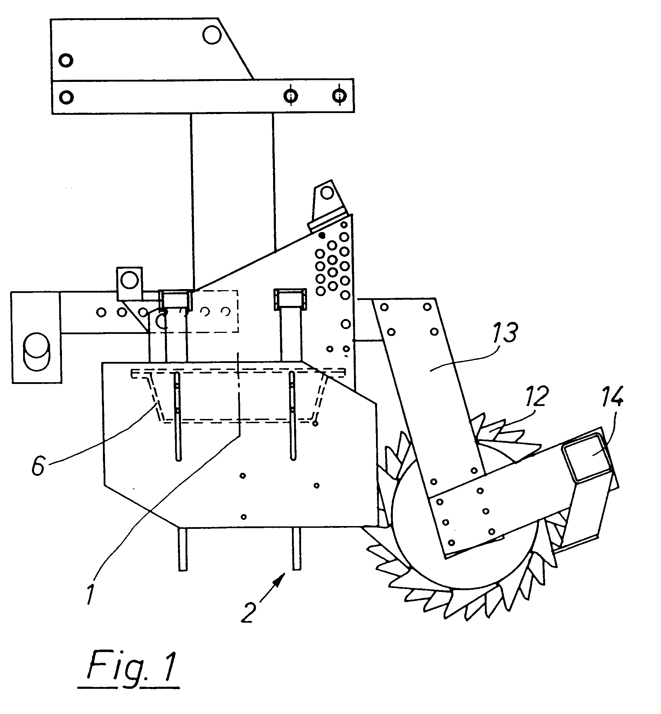

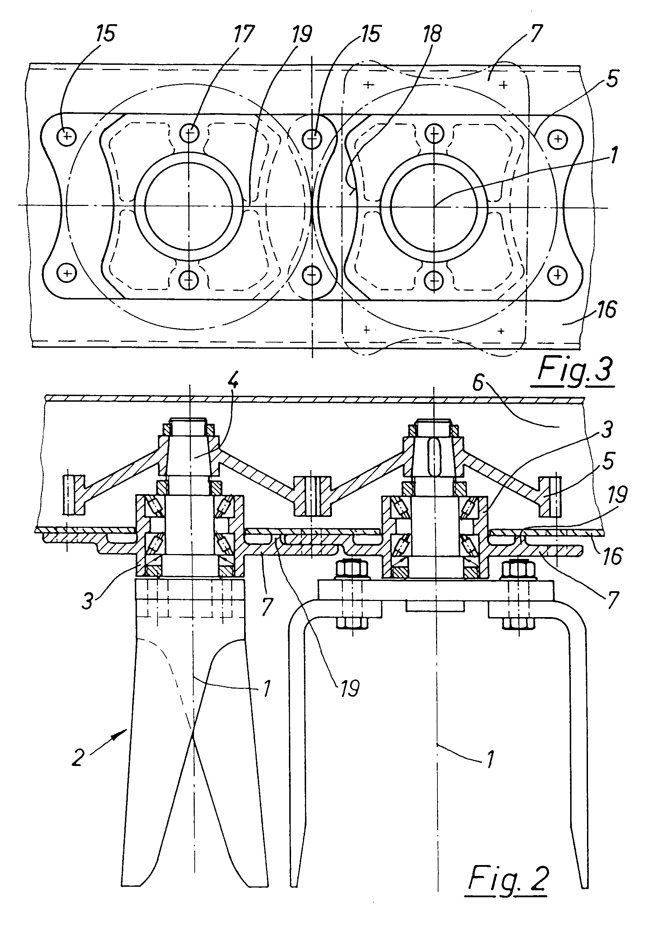

Die Fig. 1 zeigt in schematischer Weise eine Seitenansicht des erfindungsgemäßen Bodenbearbeitungsgeräts. Dieses ist hinsichtlich seiner Aufhängungs- und Lagerungseinrichtungen in üblicher Weise ausgebildet, so daß auf den bekannten Stand der Technik Bezug genommen werden kann. Die Fig. 1 zeigt in Schnittansicht ein kastenförmiges Getriebegehäuse, welches aus einem Bodenelement und einem Deckelelement zusammengesetzt ist. In schematischer Weise ist eine vertikale Achse 1 eingezeichnet, um welche sich Werkzeugkreisel 2 drehen (die Werkzeugkreisel 2 sind in Fig. 1 nicht gezeigt, es sind jeweils die freien Enden der Werkzeuge, beispielsweise der Zinken dargestellt). Das Bodenbearbeitungsgerät umfaßt weiterhin eine Walze 12, welche mittels seitlicher Tragarme 13, deren außenliegende Enden über einen Balken 14 verbunden sind, gelagert ist, der Antrieb der Werkzeugkreisel ist in Fig. 1 nicht dargestellt, er erfolgt über miteinander kämmende, in einer horizontalen Ebene angeordneten Antriebs-Zahnräder 5, welche beispielsweise in Fig. 2 gezeigt sind. In einem mittigen Bereich des Getriebegehäuses 6 ist eines der Zahnräder 5 mit weiteren Antriebsmitteln in Eingriff, um die Werkzeugkreisel 2 anzutreiben.

Die Fig. 2 und 3 zeigen ein Ausführungsbeispiel, bei welchem die Werkzeugkreisel 2 jeweils eine Kreiselwelle 4 umfassen, welche in einem Lagergehäuse 3 gelagert ist. Hinsichtlich der Lagerung, der Abdichtung sowie der Ausgestaltung der Kreiselwelle 4 wird auf den Stand der Technik verwiesen.

Erfindungsgemäß ist an dem Lagergehäuse 3 ein plattenartiger Flansch 7 ausgebildet, welcher so dimensioniert ist, daß sich benachbarte Flansche 7 schuppenartig übergreifen. Die Flansche 7 sind mittels nur schematisch dargestellter Schrauben 15 miteinander und mit einer Bodenplatte 16 des Getriebegehäuses 6 verschraubt. Das Ausführungsbeispiel zeigt, daß jeweils zwei Schrauben 15 dazu dienen, die benachbarten Flansche 7 miteinander zu verbinden. Bevorzugterweise werden Paßschrauben verwendet, welche schlüssig in geeignet ausgebildeten Bohrungen sitzen, so daß eine spielfreie Verbindung gewährleistet ist.

Um eine Demontage einzelner Werkzeugkreisel zu ermöglichen, sind die Flansche 7 jeweils um 90 Grad drehbar. Die Fig. 2 zeigt in der rechten Hälfte strichpunktiert den gedrehten Zustand eines der Flansche 7. Da der Flansch 7 in Längsrichtung des Getriebegehäuses 6, bezogen auf den montierten Zustand, länger ist, als in der Querrichtung, kann der Flansch 7 in der gezeigten Stellung entnommen werden.

Die Fig. 3 zeigt weiterhin in strichpunktierter Linie den Teilkreisdurchmesser der Zahnräder 5. Aus den Darstellungen ergibt sich, daß die Flansche 7 so dimensioniert sind, daß zur Demontage lediglich das Zahnrad 5 von der Kreiselwelle 4 abgenommen werden muß, während das Lagergehäuse 3 mit der dazugehörigen Lagerung komplett ausgetauscht werden kann. Hierdurch vereinfacht sich die Montage ganz erheblich.

Mittels zusätzlicher Schrauben an den Stellen, welche mit dem Bezugszeichen 17 versehen sind, läßt sich ein dichter Abschluß zwischen dem Flansch 7 und der Bodenplatte 16 erzielen. Hierbei kann zusätzlich eine Dichtungsplatte oder ähnliches zwischengelegt werden.

Um ein Verschwenken der Flansche 7 zu ermöglichen, weisen diese, wie mit dem Bezugszeichen 18 gezeigt, an ihren Seiten Profilierungen auf, um eine Berührung mit benachbarten Flanschen während des Verschwenkens um 90 Grad zu vermeiden.

Aus den Fig. 2 und 3 ist weiter ersichtlich, daß die Flansche jeweils zurückversetzte bzw. vorgestreckte Bereiche aufweisen, um die schuppenartige Überlagerung zu ermöglichen. Durch zusätzliche Stege 19 kann die Gesamt-Festigkeit der Flansche 7 erhöht werden.

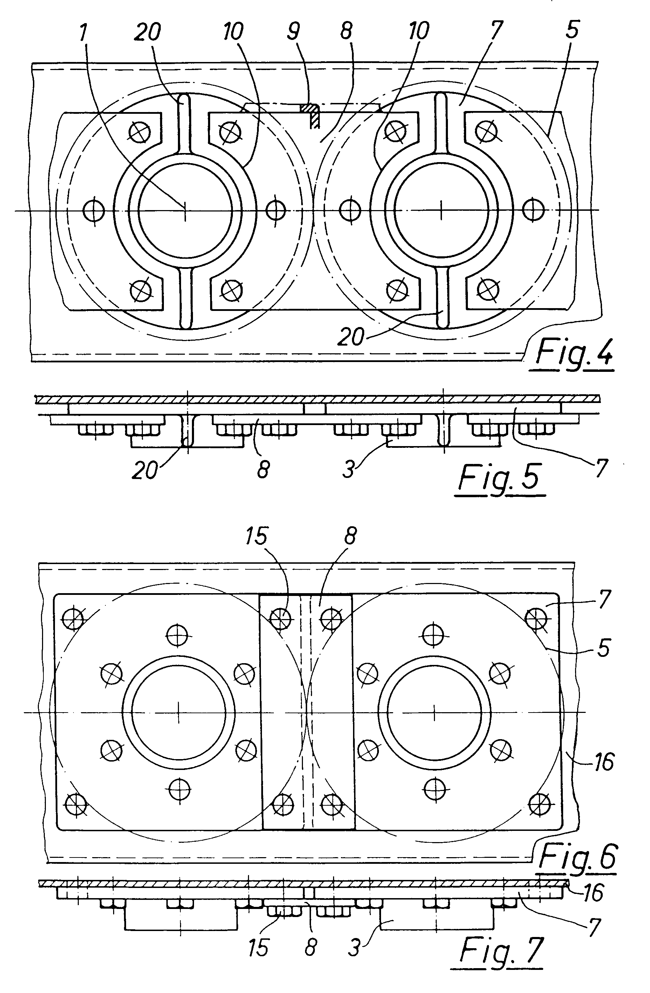

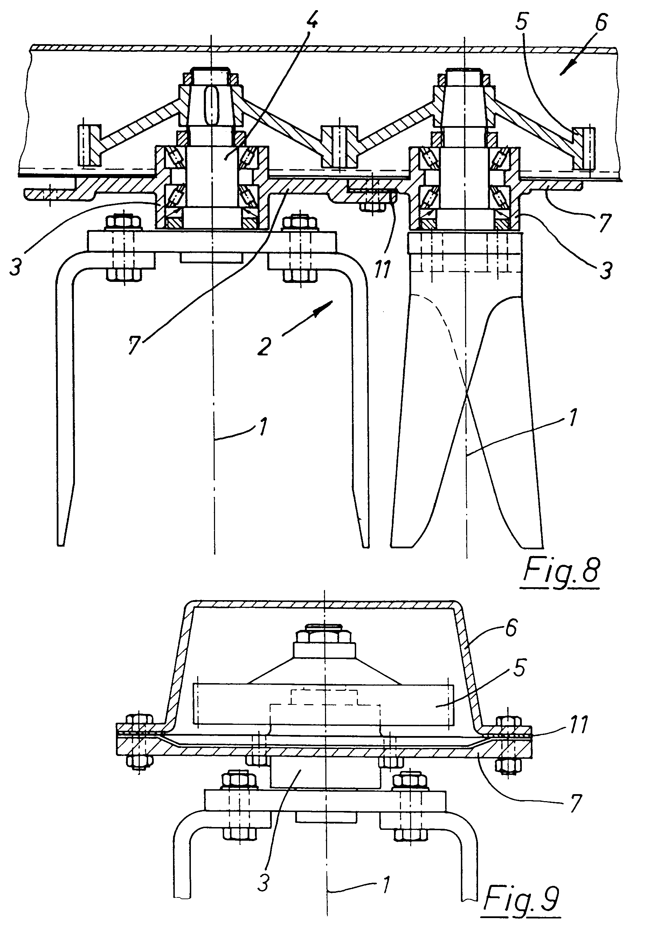

Die Fig. 4 bis 7 zeigen Ausführungsbeispiele, bei welchen benachbarte Flansche jeweils mittels einer separaten Platte 8 miteinander verbunden sind. Bei dem Ausführungsbeispiel gemäß den Fig. 6 und 7 ist die Platte 8 rechteckig ausgebildet und wird über Schrauben 18 mit dem jeweiligen Flansch 7 und der Bodenplatte 16 verschraubt.

Um die Steifigkeit der Platten 8 zu erhöhen, können diese an ihrer Außenkante 9 (siehe Fig. 4) umgebördelt sein oder eine Versteifungsrippe aufweisen.

Das Ausführungsbeispiel der Fig. 4 und 5 zeigt eine Ausgestaltungsform, bei welcher der Flansch 7 rund ausgebildet ist. Die Platte 8 weist seitliche Randaufnehmungen 10 auf, um den Flansch 7 zu umgreifen.

Auch bei den Ausführungsbeispielen der Fig. 4 bis 7 ist ersichtlich, daß jeder der Werkzeugkreisel separat demontierbar ist.

Eine zusätzliche Versteifung der Flansche ist beispielsweise durch Rippen 20 möglich, siehe Fig. 4 und 5.

Bei den Ausführungsbeispielen der Fig. 4 bis 7 können die Platten 8 von der Unterseite gegen die Bodenplatte 16 des Getriebegehäuses 1 gelegt werden, es ist auch möglich, diese im Innenraum des Getriebegehäuses 6 unterzubringen.

Die Fig. 8 und 9 zeigen ein weiteres Ausführungsbeispiel, bei welchem, im Vergleich zu den bisherigen Ausführungsbeispielen auf die Bodenplatte 16 des Getriebegehäuses 6 verzichtet wurde. Vielmehr sind die Flansche 7 mit ausreichender Festigkeit direkt miteinander verbunden. Zur Abdichtung ist eine Dichtung 11 zwischengelegt. Die Flansche 7 sind hierbei so dimensioniert, daß der jeweilige Werkzeugkreisel 2 ohne Demontage des Zahnrades 5 aus- bzw. eingebaut werden kann. Wie in Fig. 8 dargestellt, sind die Flansche 7 jeweils abwechselnd so ausgebildet, daß ein Flansch die beiden benachbarten Flansche übergreift. Bei Demontage des linken Flansches gemäß Fig. 8 kann dieser zusammen mit dem zugehörigen Zahnrad 5 ausgebaut werden. Im Bedarfsfalle ist es dann möglich, den benachbarten Flansch 7 (rechter Flansch gemäß Fig. 8) zu demontieren.

Die Fig. 9 zeigt, daß das Getriebegehäuse 6 einen hutartigen Querschnitt aufweist.

Das Ausführungsbeispiel der Fig. 8 und 9 ist besonders vorteilhaft, da die Werkzeugkreisel komplett montiert ausgebaut bzw. eingebaut werden können.

Aus Fig. 9 ist ersichtlich, daß die Dichtung 11 zu einer vollständigen Abdichtung des gesamten Randes des Flansches 7 gegen das Getriebegehäuse 6 dient, so daß der gesamte Innenraum des Getriebegehäuses 6 schmiermitteldicht und auch vor dem Eindringen von Verschmutzungen geschützt ist. Durch geeignete Dimensionierung der Dichtung 11 behindert diese nicht die Demontage der vollständig montierten Werkzeugkreisel.

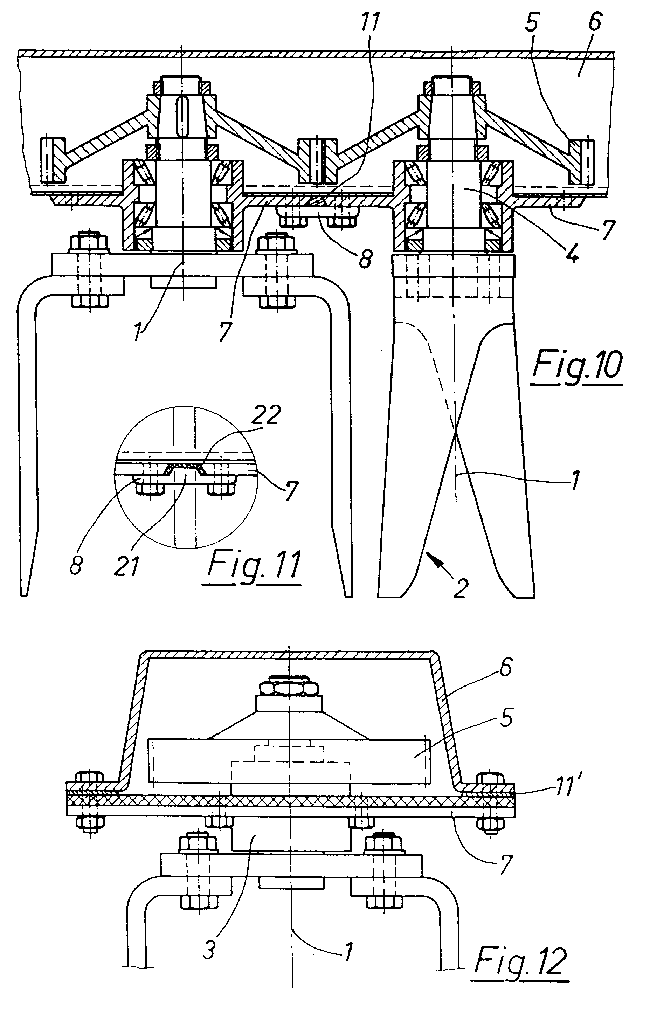

Eine weitere Ausgestaltungsvariante ist in den Fig. 10 bis 12 gezeigt. Hierbei dient eine zusätzliche Platte 8 zur gegenseitigen Verbindung benachbarter Flansche 7. Die Flansche 7 sind als ebene Platten ausgebildet und weisen an ihrem Rand eine Profilierung auf, in welche eine Dichtung 11 einbringbar ist. Die Fig. 12 zeigt, daß, ähnlich wie bei Fig. 9, eine Randdichtung 11' zur Abdichtung gegen den Rand des Getriebegehäuses 6 dient.

Die Fig. 11 zeigt eine weitere Ausgestaltungsvariante, bei welcher die Platte 8 mit einer Rippe 21 versehen ist, welche einen Dichtungsstreifen 22 in den Zwischenraum zwischen benachbarten Flanschen 7 einpreßt.

Die Schrauben sind erfindungsgemäß in geeigneter Weise abgedichtet, so daß die Dichtheit des Getriebegehäuses 6 gewährleistet ist.

Bei dem Ausführungsbeispiel nach den Fig. 8 bis 12 bilden die miteinander verbundenen Flansche den Boden des Getriebegehäuses 6. Da die Flansche mittels Paßschrauben miteinander verbunden sind und insgesamt im wesentlichen einer Zugbelastung unterworfen sind, ergibt sich ein hohes Maß an Festigkeit.

Die Erfindung ist nicht auf die gezeigten Ausführungsbeispiele beschränkt, vielmehr ergeben sich für den Fachmann vielfältige Abwandlungs- und Modifikationsmöglichkeiten im Rahmen der Ansprüche.

## Patentansprüche

1. Bodenbearbeitungsgerät mit mehreren jeweils um eine vertikale Achse (1) drehbaren Werkzeugkreiseln (2), welche eine in einem Lagergehäuse (3) gelagerte Kreiselwelle (4) umfassen, deren oberer Bereich ein mit einem benachbarten Zahnrad kämmendes Antriebs-Zahnrad (5) trägt, und mit einem sich quer zur Arbeitsrichtung des Bodenbearbeitungsgeräts erstreckenden Getriebegehäuse (6), an dem das Lagergehäuse (3) gelagert und in dem die Zahnräder (5) angeordnet sind, wobei an dem Lagergehäuse (3) ein im wesentlichen plattenförmiger Flansch (7) ausgebildet ist, welcher mit dem Getriebegehäuse (6) verbunden ist, dadurch gekennzeichnet, daß die plattenförmigen Flansche (7) benachbarter Lagergehäuse (3) lösbar miteinander und mit dem Getriebegehäuse (6) verbunden sind.

2. Bodenbearbeitungsgerät nach Anspruch 1, dadurch gekennzeichnet, daß die Flansche (7) benachbarter Lagergehäuse (3) jeweils in Teilbereichen überlappend und gemeinsam mit dem Getriebegehäuse (6) verbindbar sind.

3. Bodenbearbeitungsgerät nach Anspruch 2, dadurch gekennzeichnet, daß der Flansch (7) und das Lagergehäuse (3) zur Demontage um eine vertikale Achse um 90 Grad verschwenkbar sind.

4. Bodenbearbeitungsgerät nach Anspruch 3, dadurch gekennzeichnet, daß der Flansch (7) im montierten Zustand in Richtung der Längserstreckung des Getriebegehäuses (6) länger dimensioniert ist, als in Querrichtung.

5. Bodenbearbeitungsgerät nach einem der Ansprüche 2 bis 4, dadurch gekennzeichnet, daß benachbarte Flansche (7) jeweils schuppenartig überlappend ausgebildet sind (Fig. 2).

6. Bodenbearbeitungsgerät nach einem der Ansprüche 2 bis 4, dadurch gekennzeichnet, daß benachbarte Flansche (7) jeweils abwechselnd überlappend ausgebildet sind.

7. Bodenbearbeitungsgerät nach Anspruch 1, dadurch gekennzeichnet, daß benachbarte Flansche (7) mittels einer zumindest deren Randbereiche überdeckenden, zusammen mit den Flanschen befestigbaren Platte (8) befestigt sind (Fig. 4 und 6).

8. Bodenbearbeitungsgerät nach Anspruch 7, dadurch gekennzeichnet, daß die Außenkanten (9) der Platte (8) zur Versteifung abgekantet sind (Fig. 4).

9. Bodenbearbeitungsgerät nach einem der Ansprüche 7 oder 8, dadurch gekennzeichnet, daß die Platte (8) zur teilweisen Umgreifung des Flansches (7) und/oder des Lagergehäuses (3) eine Randausnehmung (10) aufweist (Fig. 4).

10. Bodenbearbeitungsgerät nach einem der Ansprüche 7 oder 8, dadurch gekennzeichnet, daß die Platte (8) rechteckig ausgebildet ist (Fig. 6).

11. Bodenbearbeitungsgerät nach einem der Ansprüche 7 bis 10, dadurch gekennzeichnet, daß die Platte (8) außerhalb und/oder innerhalb des Profils des Getriebegehäuses (6) angeordnet ist.

12. Bodenbearbeitungsgerät nach einem der Ansprüche 1 bis 11, dadurch gekennzeichnet, daß die Flansche (7) mit einer unteren horizontalen Wandung des Getriebegehäuses (6) verbunden sind.

13. Bodenbearbeitungsgerät nach einem der Ansprüche 1 bis 11, dadurch gekennzeichnet, daß benachbarte Flansche (7) zur Ausbildung einer selbsttragenden Struktur miteinander verbunden sind (Fig. 10 bis 12).

14. Bodenbearbeitungsgerät nach Anspruch 13, dadurch gekennzeichnet, daß die jeweils in Längserstreckung des Getriebegehäuses (6) außenliegenden Flansche (7) direkt mit dem Getriebegehäuse (6) verbunden sind.

15. Bodenbearbeitungsgerät nach Anspruch 13 oder 14, dadurch gekennzeichnet, daß der Randbereich der Flansche (7) mit einer Dichtung (11) versehen ist.

## Claims

1. Soil-tilling apparatus, having
- a plurality of rotary tool members (2) which are each rotatable about a vertical axis (1) and comprise a rotary shaft (4) mounted in a bearing housing (3), the upper region of the said shaft supporting a driving gearwheel (5) meshing with an adjacent gearwheel, and
- a gear casing (6) extending transversely to the working direction of the soil-tilling apparatus, the bearing housing (3) being mounted on the said gear casing and the gearwheels (5) being arranged inside the same, a substantially plate-shaped flange (7) being formed on the bearing housing (3) and connected to the gear casing (6), **characterised in that** the plate-shaped flanges (7) on adjacent bearing housings (3) are releasably connected to one another and to the gear casing (6).

2. Soil-tilling apparatus in accordance with claim 1, **characterised in that** the flanges (7) on adjacent bearing housings (3) can be interconnected so as to partially overlap and can be jointly connected to the gear casing (6).

3. Soil-tilling apparatus in accordance with claim 2, **characterised in that** the flange (7) and the bearing housing (3) are pivotable through 90° about a vertical axis, for the purpose of dismantling.

4. Soil-tilling apparatus in accordance with claim 3, **characterised in that** in an assembled position the flange (7) is formed to be longer in the longitudinal direction of the gear casing (6) than in the transverse direction.

5. Soil-tilling apparatus in accordance with one of claims 2 to 4, **characterised in that** adjacent flanges (7) are each formed to overlap in the manner of scales (fig. 2).

6. Soil-tilling apparatus in accordance with one of claims 2 to 4, **characterised in that** adjacent flanges (7) are each formed in an alternately overlapping manner.

7. Soil-tilling apparatus in accordance with claim 1, **characterised in that** adjacent flanges (7) are secured by means of a plate (8) which at least covers the edge region of the said flanges and can be secured together therewith (figs. 4 and 6).

8. Soil-tilling apparatus in accordance with claim 7, **characterised in that** the outer edges (9) of the plate (8) are bevelled for reinforcement (fig. 4).

9. Soil-tilling apparatus in accordance with one of claims 7 and 8, **characterised in that** the plate (8) has a recess (10) in its edge (fig. 4) to engage partially around the flange (7) and/or the bearing housing (3).

10. Soil-tilling apparatus in accordance with one of claims 7 and 8, **characterised in that** the plate (8) is rectangular (fig. 6).

11. Soil-tilling apparatus in accordance with one of claims 7 to 10, **characterised in that** the plate (8) is arranged outside and/or inside the profile of the gear casing (6).

12. Soil-tilling apparatus in accordance with one of claims 1 to 11, **characterised in that** the flanges (7) are connected to a lower horizontal wall of the gear casing (6).

13. Soil-tilling apparatus in accordance with one of claims 1 to 11, **characterised in that** adjacent flanges (7) are interconnected to form a self-supporting structure (figs. 10 to 12).

14. Soil-tilling apparatus in accordance with claim 13, **characterised in that** the flanges (7) which are each positioned at the exterior with regard to the longitudinal extension of the gear casing (6) are connected directly to the gear casing (6).

15. Soil-tilling apparatus in accordance with claim 13 or 14, **characterised in that** the edge region of each flange (7) is provided with a seal (11).

## Revendications

1. Machine de préparation du sol comportant :
plusieurs outils rotatifs (2) tournant autour d'un axe vertical (1) et comprenant un arbre rotatif (4) monté dans un carter de palier (3), et dont la zone supérieure porte un pignon denté d'entraînement (5) qui engrène avec un pignon voisin,
un carter de réducteur (6) s'étendant perpendiculairement à la direction de travail de la machine de préparation du sol, sur lequel est disposé le carter de palier (3) et dans lequel sont disposés les pignons dentés (5),
étant entendu que, sur le carter de palier (3), est réalisée une bride (7), essentiellement en forme de plaque, qui est reliée au carter de réducteur (6),
caractérisée en ce que les brides en forme de plaque (7) de carters de paliers (3) voisins sont reliées de façon démontable les unes aux autres et au carter de réducteur (6).

2. Machine de préparation du sol suivant la revendication 1, caractérisée en ce que les brides (7) de carters de réducteur (6) voisins peuvent être reliées ensemble au carter de réducteur (6) en se recouvrant partiellement.

3. Machine de préparation du sol suivant la revendication 2, caractérisée en ce qu'en vue du démontage, on peut faire pivoter de 90 degrés la bride (7) et le carter de palier (3) autour d'un axe vertical.

4. Machine de préparation du sol suivant la revendication 3, caractérisée en ce que la bride (7), à l'état monté, a une dimension plus grande dans la direction longitudinale du carter de réducteur (6) que dans sa direction transversale.

5. Machine de préparation du sol suivant l'une des revendications 2 à 4, caractérisée en ce que des brides voisines (7) sont réalisées chacune de façon à se recouvrir à la façon d'écailles (figure 2).

6. Machine de préparation du sol suivant l'une des revendications 2 à 4, caractérisée en ce que des brides voisines (7) sont réalisées de façon à se recouvrir chacune alternativement.

7. Machine de préparation du sol suivant la revendication 1, caractérisée en ce que des brides voisines (7) sont fixées ensemble au moyen d'une plaque (8) qui peut être fixée avec les brides en recouvrant au moins leurs zones de bordure (figures 4 et 6).

8. Machine de préparation du sol suivant la revendication 7, caractérisée en ce que les arêtes extérieures (9) de la plaque (8) sont rabattues dans un but de fixation (figure 4).

9. Machine de préparation du sol suivant la revendication 7 ou la revendication 8, caractérisée en ce que la plaque (8) présente un évidement en bordure (10) pour créer partiellement un engagement périphérique de la bride (7) et/ou du carter de palier (3) (figure 4).

10. Machine de préparation du sol suivant la revendication 7 ou la revendication 8, caractérisée en ce que la plaque (8) est réalisée rectangulaire (figure 6).

11. Machine de préparation du sol suivant l'une des revendications 7 à 10, caractérisée en ce que la plaque (8) est disposée à l'extérieur et/ou à l'intérieur du profil du carter de réducteur (6).

12. Machine de préparation du sol suivant l'une des revendications 1 à 11, caractérisée en ce que les brides (7) sont reliées à une paroi horizontale inférieure du carter de réducteur (6).

13. Machine de préparation du sol suivant l'une des revendications 1 à 11, caractérisée en ce que des brides (7) voisines sont reliées ensemble de façon à former une structure autoportante (figures 10 à 12).

14. Machine de préparation du sol suivant la revendication 13, caractérisée en ce que chacune des brides (7) se trouvant à l'extérieur, suivant la direction longitudinale du carter de réducteur (6), est reliée directement au carter de réducteur (6).

15. Machine de préparation du sol suivant la revendication 13 ou la revendication 14, caractérisée en ce que la zone de bordure de la bride (7) est équipée d'un joint d'étanchéité (11).
